# EUROPÄISCHE PATENTANMELDUNG

(11) **EP 4 280 103 A1**
(43) Veröffentlichungstag der Anmeldung: **22.11.2023**
(21) Anmeldenummer: 22173855.2
(22) Anmeldetag: 17.05.2022
(51) Int. Cl.: G06K 19/00, B32B 29/00, B32B 5/02

(54) **SCHICHTPRESSSTOFFPLATTE MIT INTEGRIERTEM BAUELEMENT UND VERFAHREN ZU IHRER HERSTELLUNG**

(71) Anmelder: FunderMax GmbH, 9300 St. Veit/Glan (AT)
(72) Erfinder: SCHÖBITZ, Gernot, 9300 St. Veit/Glan (AT); HUBER, Christoph, 9300 St. Veit/Glan (AT)
(74) Vertreter: Vossius & Partner Patentanwälte Rechtsanwälte mbB

(57) **Zusammenfassung**

Die Erfindung betrifft eine Schichtpressstoffplatte, umfassend einen Kern, eine Deckschicht an einer oder beiden Plattenoberflächen, sowie ein elektrisch leifähiges Bauelement, wobei das elektrisch leitfähige Bauelement eine gestickte Struktur aufweist, die durch Sticken eines elektrischen Leiters in ein Trägermaterial ausgebildet ist, und wobei das bestickte Trägermaterial als eine Zwischenlage in die Schichtpressstoffplatte integriert ist. Darüber hinaus betrifft die Erfindung ein Verfahren zur Herstellung der Schichtpressstoffplatte.

## Beschreibung

Die vorliegende Erfindung betrifft eine Schichtpressstoffplatte, in der ein elektrisch leitfähiges Bauelement, wie beispielsweise eine Antenne, enthalten ist, wobei das elektrisch leitfähige Bauelement eine als technische Stickerei ausgebildete Struktur aufweist. Darüber hinaus betrifft sie ein Herstellungsverfahren für eine entsprechende Schichtpressstoffplatte.

Schichtpressstoffplatten kommen vielfältig in Architektur und Innenausbau zum Einsatz, z.B. als Fassaden- oder Wandverkleidung. Die Integration von leitfähigen Bauelementen, wie beispielsweise elektronischen Bauteilen oder Antennen, die Signale wie Daten- oder Mobilfunksignale senden, empfangen, verarbeiten und/oder weiterleiten können, schafft dabei interessante Anwendungs- und Gestaltungsmöglichkeiten.

Allerdings ist Integration solcher Bauelemente unter Gewährleistung ihrer vollen Funktionalität in eine Schichtpressstoffplatte problematisch, da bei der Herstellung der Schichtpressstoffplatte hohe Drücke und hohe Temperaturen angewandt werden. Dadurch kann es zu einer Beschädigung am Bauelement selbst oder von ggf. vorliegenden Verbindungsleitungen kommen. Darüber hinaus wird eine exakte Positionierung eines Bauelements in der Schichtpressstoffplatte durch den Aufbau der Platte erschwert. So ist das Einbringen von Aussparungen für Bauelemente im Inneren der Platte konstruktiv aufwändig. Das Aufkleben des Bauelements auf bei der Herstellung verwendete Kernlagen erschwert das Handling der Kernlagen beim Verschlichten, und insbesondere bei komplexeren Geometrien ist eine Verklebung häufig nicht ausreichend stabil.

WO 2017/111590 offenbart eine Schichtpressstoffplatte, die in ihrer Kernschicht einen RFID-Sensor enthält. Zum Einbringen des passiven Sensors in die Kernschicht wird das Einlegen in den Pressstapel zum Bilden der Kernschicht vorgeschlagen, ggf. unter Einsatz einer Trägerlage mit Aussparung, oder der Einsatz einer thermisch verformbaren Stützschicht z.B. aus einem thermoplastischen Polymer, in die der Sensor beim Verpressen eingebettet wird. Im Rahmen der vorliegenden Erfindung wird eine Schichtpressstoffplatte bereitgestellt, umfassend einen Kern, eine Deckschicht an einer oder beiden Plattenoberflächen, sowie ein elektrisch leifähiges Bauelement, wobei das elektrisch leitfähige Bauelement eine gestickte Struktur aufweist, die durch Sticken eines elektrischen Leiters in ein Trägermaterial ausgebildet ist, und wobei das bestickte Trägermaterial als eine Zwischenlage in die Schichtpressstoffplatte integriert ist. Darüber hinaus wird ein Verfahren zur Herstellung einer solchen Schichtpressstoffplatte bereitgestellt.

Die Erfindung ermöglicht die Integration einer technischen Funktionalität auf dauerhafte und vor Zerstörung geschützte Weise in eine Schichtpressstoffplatte. Komplexe dreidimensionale Elemente können in mehrlagigem Aufbau bereitgestellt werden, da es das Sticken eines elektrischen Leiters in ein Trägermaterial erlaubt, dass leitfähige Strukturen in benachbarten Trägermateriallagen dauerhaft miteinander in Kontakt stehen.

Empfindliche leitfähige Strukturen können ohne Beeinträchtigung ihrer Funktion in die Platte integriert werden und sind vor Außeneinflüssen (z.B. Witterung) geschützt. Gleichzeitig werden auch negative Auswirkungen auf die Stabilität der Plattenstruktur vermieden, wie sie beispielsweise durch den in WO 2017/111590 vorgeschlagenen Einbau einer Polymerlage als Stützschicht für einen Sensor hervorgerufen werden können, da die Polymerschicht als Sperrschicht für das duroplastische Harz im Plattenkern wirken kann und auch in Bezug auf Brandschutz nachteilig sein kann.

Schließlich ermöglicht die Verwendung einer bestickten Trägerschicht als Zwischenschicht in der Schichtpressstoffplatte eine exakte Positionierung des Bauelements und ein problemloses Handling ohne die Gefahr eines Verrutschens oder Abfallens der leitfähigen Struktur.

Im Folgenden werden Aspekte der Erfindung zusammengefasst, wobei es sich bei den Punkten, die einen Rückbezug auf vorangehende Punkte enthalten, um bevorzugte Ausführungsformen der Erfindung handelt.
1. Schichtpressstoffplatte, umfassend einen Kern, eine Deckschicht an einer oder beiden Plattenoberflächen, sowie ein elektrisch leifähiges Bauelement, wobei das elektrisch leitfähige Bauelement eine gestickte Struktur aufweist, die durch Sticken eines elektrischen Leiters in ein Trägermaterial ausgebildet ist, und wobei das bestickte Trägermaterial als eine Zwischenlage in die Schichtpressstoffplatte integriert ist.
2. Schichtpressstoffplatte nach Punkt 1, wobei das elektrisch leitfähige Bauelement im Kern der Schichtpressstoffplatte enthalten und das bestickte Trägermaterial als Zwischenlage in den Kern der Schichtpressstoffplatte integriert ist.
3. Schichtpressstoffplatte nach Punkt 1 oder 2, wobei es sich bei dem zum Sticken verwendeten elektrischen Leiter um ein elektrisch leitfähiges Garn oder um einen Draht handelt.
4. Schichtpressstoffplatte nach Punkt 3, wobei es sich bei dem elektrisch leitfähigen Garn um ein Garn mit einer Metallbeschichtung oder um ein Garn mit Fasern aus einem leitfähigen Material handelt.
5. Schichtpressstoffplatte nach einem der Punkte 1 bis 4, wobei das Trägermaterial Poren oder Zwischenräume aufweist, die mit einem im Kern der Schichtpressstoffplatte enthaltenen Harz imprägniert sind.
6. Schichtpressstoffplatte nach einem der Punkte 1 bis 5, wobei das Trägermaterial ein faserhaltiges Material ist.
7. Schichtpressstoffplatte nach einem der Punkte 1 bis 6, wobei das Trägermaterial ausgewählt ist aus einem Textilmaterial und Papier.
8. Schichtpressstoffplatte nach einem der Punkte 1 bis 7, wobei das Trägermaterial ausgewählt ist aus einem Vliesstoff, einem Gewebe, einem Gewirk und einem Gestrick.
9. Schichtpressstoffplatte nach Punkt 8, wobei der Kern der Schichtpressstoffplatte eine oder mehrere Lagen des bestickten Trägermaterials als Zwischenlage(n) umfasst.
10. Schichtpressstoffplatte nach Punkt 9, wobei im Kern der Schichtpressstoffplatte mehrere Lagen des bestickten Trägermaterials unter Ausbildung eines Bauelements kombiniert sind, welches mehrere Lagen gestickter Strukturen aufweist.
11. Schichtpressstoffplatte nach einem der Punkte 1 bis 10, wobei das Bauelement eine Flächenausdehnung von mindestens 100 mm², stärker bevorzugt mindestens 200 mm² aufweist, bezogen auf die von dem elektrischen Leiter belegte Fläche in der Plattenebene.
12. Schichtpressstoffplatte nach einem der Punkte 1 bis 11, wobei die gestickte Struktur eine maximale Höhenausdehnung in Dickenrichtung der Schichtpressstoffplatte von weniger als 2,0 mm, stärker bevorzugt weniger als 1,5 mm, aufweist.
13. Schichtpressstoffplatte nach einem der Punkte 1 bis 12, wobei es sich bei dem elektrisch leitfähigen Bauelement um eine Antenne handelt.
14. Schichtpressstoffplatte nach Punkt 13, wobei es sich bei dem elektrisch leitfähigen Bauelement um eine Antenne entweder ausschließlich zum Empfangen von Signalen oder zum Senden und Empfangen von Signalen handelt.
15. Schichtpressstoffplatte nach Punkt 13 oder 14, wobei es sich bei dem elektrisch leitfähigen Bauelement um eine WLAN-Antenne, Bluetooth-Antenne, GPS-Antenne oder um eine Mobilfunkantenne handelt, stärker bevorzugt um eine WLAN-Antenne oder eine Mobilfunkantenne.
16. Schichtpressstoffplatte nach einem der Punkte 13 bis 15, wobei es sich bei der Antenne um eine Patchantenne handelt.
17. Schichtpressstoffplatte nach einem der Punkte 13 bis 16, wobei es sich bei der Antenne um eine PIF-Antenne handelt.
18. Schichtpressstoffplatte nach einem der Punkte 1 bis 17, wobei die Schichtpressstoffplatte zusätzlich zu dem elektrisch leitfähigen Bauelement, das eine gestickte Struktur aufweist, eine Lage eines elektrisch leitfähigen Materials umfasst, die zur Abschirmung des elektrisch leifähigen Bauelements dient.
19. Schichtpressstoffplatte nach einem der Punkte 1 bis 18, wobei eine Außenfläche der Schichtpressstoffplatte einen elektrischen Kontakt aufweist, der über eine elektrische Verbindung mit dem in der Schichtpressstoffplatte enthaltenen Bauelement verbunden ist.
20. Schichtpressstoffplatte nach Punkt 19, wobei es sich bei der Außenfläche, die den elektrischen Kontakt aufweist, um eine Plattenoberfläche oder um eine Kante der Schichtpressstoffplatte handelt.
21. Schichtpressstoffplatte nach einem der Punkte 19 oder 20, wobei die elektrische Verbindung eine Streifenleitung umfasst, besonders bevorzugt eine Streifenleitung, die eine gestickte Struktur aufweist, die durch Sticken eines elektrischen Leiters in ein Trägermaterial ausgebildet ist.
22. Schichtpressstoffplatte nach einem der Punkte 19 bis 21, wobei der elektrische Kontakt einen Steckverbinder, wie zum Beispiel einen SMA-Steckverbinder oder einen MHF-Steckverbinder, umfasst.
23. Schichtpressstoffplatte nach Punkt 22, wobei der Steckverbinder auf einer Plattenoberfläche angebracht ist und einen Anschluss aufweist, der in die Platte hineinragt und mit dem Bauelement in Kontakt steht.
24. Schichtpressstoffplatte nach einem der Punkte 1 bis 23, wobei der Kern Papier, bevorzugt Kraftpapier, und ein ausgehärtetes duroplastisches Harz, bevorzugt Phenol-Formaldehydharz, umfasst.
25. Schichtpressstoffplatte nach einem der Punkte 1 bis 24, wobei die Deckschicht ein Dekorpapier und ein duroplastisches Harz, bevorzugt ein Melamin-Formaldehydharz, umfasst.
26. Schichtpressstoffplatte nach Punkt 25, wobei das Dekorpapier zusätzlich eine Polymerbeschichtung trägt.
27. Schichtpressstoffplatte nach einem der Punkte 1 bis 26, wobei die Schichtpressstoffplatte eine Dicke im Bereich von 0,8 bis 30 mm, stärker bevorzugt 6 bis 25 mm aufweist.
28. Schichtpressstoffplatte nach einem der Punkte 1 bis 27, wobei die Schichtpressstoffplatte eine Länge im Bereich von 2000 bis 4500 mm und eine Breite im Bereich von 1000 bis 2000 mm aufweist.
29. Schichtpressstoffplatte nach einem der Punkte 1 bis 28, wobei die Schichtpressstoffplatte eine Deckschicht mit einer Positionsmarkierung aufweist, die die Position des im Kern enthaltenen Bauelements markiert.
30. Verfahren zur Herstellung einer Schichtpressstoffplatte, die einen Kern, eine Deckschicht an einer oder beiden Plattenoberflächen, sowie ein elektrisch leitfähiges Bauelement umfasst, wobei das elektrisch leitfähige Bauelement eine gestickte Struktur aufweist, die durch Sticken eines elektrischen Leiters in ein Trägermaterial ausgebildet ist, und wobei das bestickte Trägermaterial als Zwischenlage in die Schichtpressstoffplatte integriert ist,
   wobei das Verfahren die folgenden Schritte umfasst:
   Bereitstellen eines Pressstapels, der mindestens die folgenden Lagen umfasst
      (i) mehrere imprägnierte Kernlagen, die mit einem härtbaren duroplastischen Harz imprägniert sind,
      (ii) eine Lage zum Bilden einer Deckschicht;
      (iii) eine Lage des mit dem elektrischen Leiter bestickten Trägermaterials als Zwischenlage, und
   Verpressen des Pressstapels bei einer Temperatur und einem Druck, die ausreichen, um das Fließen und das anschließende Aushärten des härtbaren duroplastischen Harzes ermöglichen.
31. Verfahren nach Punkt 30, wobei die Lage des mit dem elektrischen Leiter bestickten Trägermaterials im Pressstapel als Zwischenlage zwischen zwei imprägnierten Kernlagen vorliegt, so dass das bestickte Trägermaterial als Zwischenlage in den Kern der hergestellten Schichtpressstoffplatte integriert ist.
32. Verfahren nach Punkt 30 oder 31, wobei der Pressstapel 2 bis 250, vorzugsweise 15 bis 122, imprägnierte Kernlagen enthält.
33. Verfahren nach einem der Punkte 30 bis 32, wobei das härtbare duroplastische Harz, mit dem die imprägnierten Kernlagen imprägniert sind, ein Phenol-Formaldehydharz ist.
34. Verfahren nach einem der Punkte 30 bis 33, wobei es sich bei den imprägnierten Kernlagen um Lagen aus imprägniertem Kraftpapier handelt.
35. Verfahren nach einem der Punkte 30 bis 34, wobei sich bei dem zum Sticken verwendeten elektrischen Leiter um ein leitfähiges Garn oder um einen Draht handelt.
36. Verfahren nach Punkt 35, wobei es sich bei dem leitfähigen Garn um ein Garn mit einer Metallbeschichtung oder um ein Garn mit Fasern aus einem leitfähigen Material handelt.
37. Verfahren nach einem der Punkte 30 bis 36, wobei das Trägermaterial Poren oder Zwischenräume aufweist.
38. Verfahren nach einem der Punkte 30 bis 37, wobei das Trägermaterial ein faserhaltiges Material ist.
39. Verfahren nach einem der Punkte 30 bis 38, wobei das Trägermaterial ausgewählt ist aus einem Textilmaterial und Papier.
40. Verfahren nach einem der Punkte 30 bis 39, wobei das Trägermaterial ausgewählt ist aus einem Vliesstoff, einem Gewebe, einem Gewirk und einem Gestrick.
41. Verfahren nach einem der Punkte 30 bis 40, wobei das Trägermaterial mit einem härtbaren duroplastischen Harz, vorzugsweise mit einem Phenol-Formaldehydharz, imprägniert ist.
42. Verfahren nach Punkt 41, wobei der Kern der Schichtpressstoffplatte eine oder mehrere Lagen des bestickten Trägermaterials als Zwischenlage(n) umfasst.
43. Verfahren nach einem der Punkte 41 oder 42, wobei im Pressstapel mehrere Lagen des bestickten Trägermaterials aufeinander als Zwischenlagen zwischen zwei imprägnierten Kernlagen vorliegen, so dass das elektrisch leitfähige Bauelement im Kern der Schichtpressstoffplatte mehrere Lagen gestickter Strukturen aufweist.
44. Verfahren nach einem der Punkte 30 bis 43, wobei das Bauelement eine Flächenausdehnung von mindestens 100 mm², stärker bevorzugt mindestens 200 mm² aufweist, bezogen auf die von dem elektrischen Leiter belegte Fläche in der Plattenebene.
45. Verfahren nach einem der Punkte 30 bis 44, wobei die gestickte Struktur eine maximale Höhenausdehnung in Dickenrichtung der Schichtpressstoffplatte von weniger als 2,0 mm, stärker bevorzugt weniger als 1,5 mm, aufweist.
46. Verfahren nach einem der Punkte 30 bis 45, wobei es sich bei dem elektrisch leitfähigen Bauelement um eine Antenne handelt.
47. Verfahren nach Punkt 46, wobei es sich bei dem elektrisch leitfähigen Bauelement um eine Antenne entweder ausschließlich zum Empfangen von Signalen oder zum Senden und Empfangen von Signalen handelt.
48. Verfahren nach einem der Punkte 46 oder 47, wobei es sich bei dem elektrisch leitfähigen Bauelement um eine WLAN-Antenne, Bluetooth-Antenne, GPS-Antenne oder um eine Mobilfunkantenne handelt, stärker bevorzugt um eine WLAN-Antenne oder eine Mobilfunkantenne.
49. Verfahren nach einem der Punkte 46 bis 48, wobei es sich bei der Antenne eine Patchantenne handelt.
50. Verfahren nach einem der Punkte 46 bis 49, wobei es sich bei der Antenne um eine PIF-Antenne handelt.
51. Verfahren nach einem der Punkte 30 bis 50, wobei der Pressstapel zusätzlich zu der Lage des mit dem elektrischen Leiter bestickten Trägermaterials eine Lage eines elektrisch leitfähigen Materials umfasst, so dass die Schichtpressstoffplatte zusätzlich zu dem elektrisch leitfähigen Bauelement, das eine gestickte Struktur aufweist, eine Lage eines elektrisch leitfähigen Materials umfasst, die zur Abschirmung des elektrisch leitfähigen Bauelements dient.
52. Verfahren nach einem der Punkte 30 bis 51, wobei eine Außenfläche der Schichtpressstoffplatte einen elektrischen Kontakt aufweist, der über eine elektrische Verbindung mit dem in der Schichtpressstoffplatte enthaltenen Bauelement verbunden ist.
53. Verfahren nach Punkt 52, wobei es sich bei der Außenfläche, die den elektrischen Kontakt aufweist, um eine Plattenoberfläche oder um eine Kante der Schichtpressstoffplatte handelt.
54. Verfahren nach einem der Punkte 52 oder 53, wobei die elektrische Verbindung eine Streifenleitung umfasst, besonders bevorzugt eine Streifenleitung, die eine gestickte Struktur aufweist, die durch Sticken eines elektrischen Leiters in ein Trägermaterial ausgebildet ist.
55. Verfahren nach einem der Punkte 52 bis 54, wobei der elektrische Kontakt einen Steckverbinder, wie zum Beispiel einen SMA-Steckverbinder oder einen MHF-Steckverbinder, umfasst.
56. Schichtpressstoffplatte nach Punkt 55, wobei der Steckverbinder auf einer Plattenoberfläche angebracht ist und einen Anschluss aufweist, der in die Platte hineinragt und mit dem Bauelement in Kontakt steht.
57. Verfahren nach einem der Punkte 30 bis 56, wobei die Lage eines Materials zum Bilden einer Deckschicht ein Dekorpapier umfasst, das bevorzugt mit einem härtbaren duroplastischen Harz, stärker bevorzugt mit einem härtbaren Melamin-Formaldehydharz imprägniert ist.
58. Verfahren nach einem der Punkte 30 bis 57, wobei die Lage zum Bilden einer Deckschicht ein Dekorpapier umfasst, das eine Polymerbeschichtung trägt, welche ein funktionelles Polymer aufweist, das ausgewählt ist aus einem Polyurethan-Polymer, das Gruppen mit einer (meth)acrylischen Doppelbindung aufweist, und einem Polyurethan(meth)acrylat-Polymer.
59. Verfahren nach einem der Punkte 30 bis 57, wobei die Lage zum Bilden einer Deckschicht ein Dekorpapier umfasst, das eine mehrschichtige Polymerbeschichtung trägt, welche in ihrer Oberflächenbeschichtung ein Polyurethan-Polymer enthält, das Gruppen mit einer (meth)acrylischen Doppelbindung aufweist, und in der darunter angrenzenden Schicht ein Polyurethan-Polymer enthält.
60. Verfahren nach einem der Punkte 30 bis 59, wobei das Verpressen des Pressstapels bei einer Temperatur von mehr als 100 °C, besonders bevorzugt von 130 bis 150 °C durchgeführt wird.
61. Verfahren nach einem der Punkte 30 bis 60, wobei das Verpressen des Pressstapels bei einem Druck von mehr als 2×10⁶ Pa (20 bar), besonders bevorzugt von 6×10⁶ - 8×10⁶ Pa (60 bis 80 bar) durchgeführt wird.
62. Verfahren nach einem der Punkte 30 bis 61, wobei die Schichtpressstoffplatte eine Dicke im Bereich von 0,8 bis 30 mm, besonders bevorzugt 6 bis 25 mm aufweist.
63. Verfahren nach einem der Punkte 30 bis 62, wobei die Schichtpressstoffplatte eine Länge im Bereich von 2000 bis 4500 mm und eine Breite im Bereich von 1000 bis 2000 mm aufweist.
64. Verfahren nach einem der Punkte 30 bis 63, wobei die Schichtpressstoffplatte eine Deckschicht mit einer Positionsmarkierung aufweist, die die Position des im Kern enthaltenen Bauelements markiert.
65. Schichtpressstoffplatte, umfassend einen Kern, eine Deckschicht an einer oder beiden Plattenoberflächen, sowie ein elektrisch leitfähiges Bauelement, wobei das elektrisch leitfähige Bauelement eine gestickte Struktur aufweist, die durch Sticken eines elektrischen Leiters in ein Trägermaterial ausgebildet ist und das bestickte Trägermaterial als Zwischenlage in die Schichtpressstoffplatte integriert ist, und wobei die Schichtpressstoffplatte mit einem Verfahren nach einem der Punkte 30 bis 64 erhältlich ist.

Im Folgenden werden Details der erfindungsgemäßen Schichtpressstoffplatte und des Verfahrens zu ihrer Herstellung erläutert, die sich sowohl auf die allgemeine Definition der Erfindung als auch auf die vorstehend zusammengefassten Aspekte beziehen.

Erfindungsgemäß wird eine Schichtpressstoffplatte bereitgestellt, die ein elektrisch leitfähiges Bauelement, z.B. eine Antenne, enthält. Schichtpressstoffplatten werden auch als Hochdruck-Schichtpressstoffplatten, Hochdruck-Laminate oder HPL-Platten (von High Pressure Laminate) bezeichnet.

Eine Schichtpressstoffplatte ist als plattenförmiges Laminat mit zwei oder mehr Schichten ausgebildet und umfasst einen Kern (auch als Kernschicht bezeichnet) und eine Deckschicht an einer oder an beiden Plattenoberflächen, bevorzugt an beiden Plattenoberflächen. Bei der Deckschicht/den Deckschichten handelt es sich typischerweise um eine dekorative Oberflächenschicht, die z.B. eine Dekorschicht und eine darauf als zusätzlichen Oberflächenschutz befindliche Polymerbeschichtung umfassen kann.

Die Vorderseite und die Rückseite der Schichtpressstoffplatte, bei denen es sich um die Seiten der Platte mit der größten Fläche handelt, werden auch als Plattenoberflächen bezeichnet. Als Plattenebene wird die Ebene bezeichnet, in der sich die Plattenoberflächen erstrecken. Die Länge und Breite der Plattenoberflächen definiert in der Regel auch die Länge und Breite der Schichtpressstoffplatte.

Als Dicke der Platte wird generell die Ausdehnung der Platte senkrecht zur Plattenebene bezeichnet. Die Flächen der Platte, die sich an ihren Rändern zwischen der Vorderseite und der Rückseite erstrecken und die typischerweise senkrecht zur Plattenebene verlaufen, werden als Kanten bzw. Plattenkanten bezeichnet.

Der Kern bzw. die Kernschicht einer Schichtpressstoffplatte wird durch Verpressen mehrerer Kernlagen gebildet, die mit einem härtbaren duroplastischen Harz imprägniert sind. Durch das Verpressen der Kernlagen unter Aushärten des Harzes werden die Kernlagen zu einem Kern verbunden. Bei dem Kern kann es sich um eine monolithische Schicht in der Laminatstruktur der Schichtpressstoffplatte handeln, in der die Kernlagen als Ausgangsmaterial nicht mehr als solche erkennbar sind.

Bevorzugt weist die erfindungsgemäße Schichtpressstoffplatte einen dreischichtigen Aufbau mit einer Deckschicht an der Plattenrückseite, einem Kern und einer Deckschicht an der Plattenvorderseite auf.

Das elektrisch leitfähige Bauelement ist bevorzugt im Kern der erfindungsgemäßen Schichtpressstoffplatte enthalten.

Demgemäß betrifft ein Aspekt der Erfindung die erfindungsgemäße Schichtpressstoffplatte, die einen Kern, eine Deckschicht an einer oder beiden Plattenoberflächen, sowie ein elektrisch leitfähiges Bauelement umfasst, das bevorzugt im Kern enthalten ist, wobei das elektrisch leitfähige Bauelement eine gestickte Struktur aufweist, die durch Sticken eines elektrischen Leiters in ein Trägermaterial ausgebildet ist, und wobei das bestickte Trägermaterial als Zwischenlage in die Schichtpressstoffplatte integriert ist, und vorzugsweise als Zwischenlage in den Kern der Schichtpressstoffplatte integriert ist. Ein weiterer Aspekt betrifft das Verfahren zur Herstellung der erfindungsgemäßen Schichtpressstoffplatte, wobei das Verfahren die folgenden Schritte umfasst:

Bereitstellen eines Pressstapels, der mindestens die folgenden Lagen umfasst
(i) mehrere imprägnierte Kernlagen, die mit einem härtbaren duroplastischen Harz imprägniert sind,
(ii) eine Lage eines Materials zum Bilden einer Deckschicht,
(iii) eine Lage des mit dem elektrischen Leiter bestickten Trägermaterials als Zwischenlage, bevorzugt als Zwischenlage zwischen zwei imprägnierten Kernlagen, und

Verpressen des Pressstapels bei einer Temperatur und einem Druck, die ausreichen, um das Fließen und das anschließende Aushärten des härtbaren duroplastischen Harzes ermöglichen.

Für die imprägnierten Kernlagen können Materialien eingesetzt werden, die dem Fachmann für die Herstellung von Schichtpressstoffplatten geläufig sind.

So kann als imprägnierte Kernlage z.B. ein imprägniertes Vlies oder ein imprägniertes Gewebe verwendet werden, die natürliche oder synthetische, organische oder anorganische Fasern umfassen können. Bevorzugt handelt es sich bei der imprägnierten Kernlage um eine Lage aus imprägniertem Papier (auch als Kernpapier bezeichnet), besonders bevorzugt eine Lage aus imprägniertem Kraftpapier. Die Grammatur des für Kernlagen einsetzbaren Papiers kann z.B. 60 bis 500 g/m² betragen, typischerweise liegt sie im Bereich von 160 bis 260 g/m² (ohne das Gewicht des zum Imprägnieren eingesetzten Harzes). Die Länge und Breite der Kernlagen wird typischerweise so gewählt, dass sie der Länge und Breite der Schichtpressstoffplatte entspricht.

Als härtbares duroplastisches Harz, mit dem die Kernlagen imprägniert sind, kommen typischerweise Harze, wie insbesondere Kunstharze, zum Einsatz, die für die Anwendung in Schichtpressstoffplatten bekannt sind, wie z.B. ein härtbares Phenol-Formaldehydharz (PF-Harz), Melamin-Formaldehydharz (MF-Harz), Harnstoff-Formaldehydharz (UF-Harz) oder Mischharze daraus. Bevorzugt wird ein härtbares Phenol-Formaldehydharz verwendet. Als härtbares duroplastisches Harz wird dabei ein Harz bezeichnet, das noch eine Härtungsreaktion durchlaufen kann und dabei ein festes, duroplastisches Polymer bildet. Diese Härtungsreaktion findet üblicherweise beim Verpressen des Pressstapels statt.

Der Pressstapel enthält typischerweise 2 bis 250, vorzugsweise 15 bis 122 imprägnierte Kernlagen.

Entsprechend umfasst der Kern bevorzugt Papier und ein ausgehärtetes duroplastisches Harz wie vorstehend beschrieben, d.h. bei dem Papier handelt es sich bevorzugt um Kraftpapier und bei dem ausgehärteten duroplastischen Harz bevorzugt um ein Kunstharz wie ein Phenol-Formaldehydharz. In der Regel ist der Gewichtsanteil des Papiers im Kern höher als der des ausgehärteten duroplastischen Harzes.

Die erfindungsgemäße Schichtpressstoffplatte umfasst eine Deckschicht an einer oder beiden Plattenoberflächen, d.h. an der Vorderseite, an der Rückseite oder an der Vorder- und Rückseite der Schichtpressstoffplatte. Auch die Deckschicht(en) können Materialien umfassen, die dem Fachmann für diesen Zweck geläufig sind. Bevorzugt liegt sowohl an der Plattenvorderseite als auch an der Plattenrückseite eine Deckschicht vor. Sie können den gleichen Aufbau aufweisen oder unterschiedlich aufgebaut sein. Eine Deckschicht kann in mehrere Schichten unterteilt sein.

Bei der Deckschicht handelt es sich typischerweise um eine dekorative Oberflächenschicht. Eine bevorzugte Deckschicht umfasst daher eine Dekorschicht, z.B. eine Lage eines Dekorpapiers. Als Dekorpapier kann beispielsweise ein einfarbig durchgefärbtes oder bedrucktes Papier verwendet werden. In Bezug auf das Dekor gibt es keine wesentlichen Einschränkungen, so können beispielsweise eine Holzmaserung, eine Steinoberfläche oder ein Fantasiedekor aufgedruckt werden. Mittels Digitaldruck (z.B. Inkjet) lassen sich dabei eine Vielzahl von Dekoren auch als Einzelstücke auf ein Dekorpapier aufbringen. Im Rahmen der vorliegenden Erfindung kann so z.B. eine Deckschicht auf der Schichtpressstoffplatte bereitgestellt werden, die eine Positionsmarkierung aufweist, mit der die Position des im Kern enthaltenen Bauelements auf der Plattenoberfläche (z.B. auf der Rückseite der Platte) markiert ist.

Die Grammatur eines als Dekorpapier einsetzbaren Papiers kann z.B. 20 bis 400 g/m² betragen, typischerweise liegt sie im Bereich von 40 bis 200 g/m² (ohne das Gewicht eines zum Imprägnieren eingesetzten Harzes).

Die Länge und Breite des Dekorpapiers für die Dekorschicht werden typischerweise so gewählt, dass sie der Länge und Breite der Schichtpressstoffplatte entsprechen.

Bevorzugt umfasst die Deckschicht als Dekorschicht daher ein Dekorpapier und ein duroplastisches Harz, besonders bevorzugt ein Kunstharz wie z.B. ein Melamin-Formaldehydharz. Das duroplastische Harz liegt in der fertigen Schichtpressstoffplatte in ausgehärteter Form in der Deckschicht vor.

Die Lage zum Bilden einer Deckschicht, die im erfindungsgemäßen Herstellungsverfahren im Pressstapel enthalten ist, umfasst daher bevorzugt ein mit einem härtbaren duroplastischen Harz imprägniertes Dekorpapier, besonders bevorzugt ein mit einem härtbaren duroplastischen Kunstharz, wie z.B. einem härtbaren Melamin-Formaldehydharz, imprägniertes Dekorpapier.

Neben der Dekorschicht umfasst die Deckschicht bevorzugt eine Polymerbeschichtung. Sie kann der Plattenoberfläche zusätzlich Beständigkeit verleihen, z.B. gegen Witterungseinflüsse, gegen Verkratzen oder gegen Chemikalien. Umfasst die Deckschicht eine solche Polymerbeschichtung, die ein- oder mehrschichtig ausgebildet sein kann, bildet diese typischerweise die äußerste Schicht auf der Vorderseite der Schichtpressstoffplatte, der Rückseite der Schichtpressstoffplatte, oder auf der Vorder- und Rückseite der Schichtpressstoffplatte. Eine stärker bevorzugte Deckschicht umfasst daher ein mit einem duroplastischen Harz imprägniertes Dekorpapier, besonders bevorzugt ein mit einem duroplastischen Kunstharz, wie z.B. einem Melamin-Formaldehydharz, imprägniertes Dekorpapier, wobei das imprägnierte Dekorpapier zusätzlich eine Polymerbeschichtung trägt.

Polymerbeschichtete Oberflächenschichten für Schichtpressstoffplatten, die auch im Rahmen der vorliegenden Erfindung als Deckschicht zur Anwendung kommen können, sind beispielsweise in WO 2017/109118 oder in WO 2018/234466 beschrieben. So kann beispielsweise die Deckschicht ein Dekorpapier umfassen, das bevorzugt mit einem duroplastischen Harz, besonders bevorzugt mit einem Kunstharz, wie z.B. einem Melamin-Formaldehydharz, imprägniert ist, und das eine Polymerbeschichtung trägt. Gemäß einer ersten bevorzugten Ausführungsform handelt es sich um eine Polymerbeschichtung mit einem Polyurethan(meth)acrylat-Polymer. Gemäß einer zweiten bevorzugten Ausführungsform handelt es sich um eine mehrschichtige Polymerbeschichtung, die in ihrer Oberflächenschicht ein Polyurethan(meth)acrylat-Polymer enthält, und in der darunter angrenzenden Schicht ein Polyurethan-Polymer enthält.

Zur Bereitstellung einer entsprechenden Deckschicht, die neben einer Dekorschicht eine Polymerbeschichtung umfasst, kann im Rahmen des erfindungsgemäßen Herstellungsverfahrens als eine Lage zum Bilden einer Deckschicht ein Dekorpapier verwendet werden, das eine Polymerbeschichtung trägt. Das verwendete Dekorpapier ist ebenfalls bevorzugt mit einem härtbaren duroplastischen Harz imprägniert, besonders bevorzugt mit einem härtbaren duroplastischen Kunstharz, wie z.B. einem härtbaren Melamin-Formaldehydharz. Die Polymerbeschichtung des Dekorpapiers gemäß einer ersten bevorzugten Ausführungsform weist ein funktionelles Polymer auf, das ausgewählt ist aus einem Polyurethan-Polymer, das Gruppen mit einer (meth)acrylischen Doppelbindung aufweist, und einem Polyurethan(meth)acrylat-Polymer. Gemäß einer zweiten bevorzugten Ausführungsform kann als eine Lage zum Bilden einer Deckschicht ein Dekorpapier verwendet werden, das eine mehrschichtige Polymerbeschichtung trägt, welche in ihrer Oberflächenbeschichtung ein Polyurethan-Polymer enthält, das Gruppen mit einer (meth)acrylischen Doppelbindung aufweist, und in der darunter angrenzenden Schicht ein Polyurethan-Polymer enthält.

Wie für den Fachmann klar sein wird, wird die Lage bzw. werden die Lagen zum Bilden einer Deckschicht im Pressstapel so verschlichtet, dass die Deckschicht in der fertigen Schichtpressstoffplatte an der Vorder- und/oder der Rückseite der Platte vorliegt. Als Verschlichten wird dabei das Anordnen der Lagen im Pressstapel bezeichnet, die nach dem Verpressen die Schichtpressstoffplatte bilden.

Das in der erfindungsgemäßen Schichtpressstoffplatte, vorzugsweise im Kern, enthaltene elektrisch leitfähige Bauelement weist eine gestickte Struktur auf, die durch Sticken eines elektrischen Leiters in ein Trägermaterial ausgebildet ist, wobei das bestickte Trägermaterial als Zwischenlage in die Schichtpressstoffplatte integriert ist, und vorzugsweise als Zwischenlage in den Kern der Schichtpressstoffplatte integriert ist.

Die erfindungsgemäße Schichtpressstoffplatte kann ein oder mehrere der elektrisch leitfähigen Bauelemente enthalten. Dabei sind z.B. die folgenden Fälle umfasst:
a) die Schichtpressstoffplatte enthält eine einzige Lage eines Trägermaterials, die ein einziges elektrisch leitfähiges Bauelement trägt, welches eine gestickte Struktur aufweist;
b) die Schichtpressstoffplatte enthält eine einzige Lage eines Trägermaterials, die mehrere elektrisch leitfähige Bauelemente trägt, welche jeweils eine gestickte Struktur aufweisen;
c) die Schichtpressstoffplatte enthält mehrere Lagen eines Trägermaterials, z.B. zwei oder drei Lagen, von denen jede ein oder mehrere elektrisch leitfähige Bauelemente trägt, welche jeweils eine gestickte Struktur aufweisen; oder
d) die Schichtpressstoffplatte enthält mehrere Lagen eines Trägermaterials, z.B. zwei oder drei Lagen, die im Kern der Schichtpressstoffplatte unter Ausbildung eines Bauelements kombiniert sind, welches mehrere Lagen gestickter Strukturen aufweist.

Sind mehrere der elektrisch leitfähigen Bauelemente in einer Schichtpressstoffplatte enthalten, dann kann es sich um Bauelemente des gleichen Typs oder um Bauelemente unterschiedlichen Typs, z.B. Antennen für unterschiedliche Sende- oder Empfangsfrequenzen, handeln.

Wie vorstehend erläutert ist das elektrisch leitfähige Bauelement vorzugsweise im Kern der Schichtpressstoffplatte enthalten. Enthält die Schichtpressstoffplatte mehrere elektrisch leitfähige Bauelemente, dann ist vorzugsweise mindestens eines, und sind stärker bevorzugt alle, im Kern enthalten.

Elektrisch leitfähige Bauelemente mit gestickten Strukturen kommen im Bereich intelligenter Textilien ("smart textiles") zum Einsatz. Als Beispiel können textile Antennen ("textile antennas") genannt werden. Im Rahmen der vorliegenden Erfindung kann daher zum Bereitstellen eines elektrisch leitfähigen Bauelements, das eine gestickte Struktur aufweist, unter anderem auf Vorgehensweisen und auf Materialien, wie z.B. leitfähige Stickgarne, zurückgegriffen werden, die für technische Stickereien bekannt sind und kommerzielle Anwendung finden. Im Rahmen der vorliegenden Erfindung wurde festgestellt, dass sich solche gestickten Strukturen nicht nur für den Einbau in Schichtpressstoffplatten eignen und dabei den Druck- und Temperatureinflüssen während der Plattenherstellung widerstehen können, sondern dass sogar ihre Leistung (z.B. die Sendeleistung einer Antenne mit einer gestickten Struktur) verbessert werden kann.

Die gestickte Struktur des elektrisch leitfähigen Bauelements ist durch Sticken eines elektrischen Leiters in ein Trägermaterial ausgebildet. Als ein zum Sticken einsetzbarer elektrischer Leiter eignet sich ein fadenförmiger elektrischer Leiter, wie z.B. ein elektrisch leitfähiges Garn oder ein Metalldraht.

Bevorzugt wird ein elektrisch leitfähiges Garn eingesetzt. Als elektrisch leitfähiges Garn kann beispielsweise ein Garn mit einer Metallbeschichtung verwendet werden. Metallbeschichtete Garne können mit Kunst- oder Naturfasern hergestellt werden, wie z.B. ein Polyestergarn oder ein Polyamidgarn. Die Metallbeschichtung kann z.B. durch Metallbedampfung aufgetragen werden. Als Metall zur Beschichtung eignen sich beispielsweise Silber, Kupfer, Nickel oder Zinn. Als kommerziell erhältliches leitfähige Stickgarn mit Metallbeschichtung, das für den Einsatz im Rahmen der Erfindung geeignet sind, kann z.B. auf Madeira HC 12 oder Madeira HC 40 der Firma MADEIRA Garnfabrik Rudolf Schmidt KG verwiesen werden.

Ein weiteres erfindungsgemäß einsetzbares, elektrisch leitfähiges Garn ist ein Garn, das Fasern aus einem leitfähigen Material enthält, wie Metallfasern, Graphitfasern oder Fasern aus einem elektrisch leitfähigen Kunststoff.

Wie für den Fachmann verständlich ist, sollte die Stärke des elektrischen Leiters, wie des elektrisch leitfähigen Garns, so gewählt werden, dass der Leiter zum Sticken verwendbar ist. Die zum Sticken verwendete Nadel kann gemäß gängiger Praxis insbesondere unter Berücksichtigung der Stärke des elektrischen Leiters, wie der Garnstärke, ausgewählt werden.

Beispielsweise können fadenförmige elektrische Leiter mit einem optischen Durchmesser (z.B. anhand einer Mikroskopaufnahme bestimmt) von weniger als 1,0 mm, bevorzugt weniger als 0,5 mm, z.B. im Bereich von 0,1 bis 0,4 mm, verwendet werden.

Elektrisch leitfähige Garne zum Einsatz als stickbarer elektrischer Leiter können beispielsweise eine Feinheit von 200 dtex oder mehr aufweisen, wie z.B. 200 bis 600 dtex, wobei sich diese Angabe bei Verwendung eines metallbeschichteten Garns auf das Basisgarn vor dem Auftragen der Metallbeschichtung bezieht. Für verzwirnte Garne wird die Feinheit als Summe der Feinheiten der Einzelfäden angegeben.

Bevorzugt weist das Bauelement eine gestickte Struktur auf, die durch Sticken eines metallbeschichteten Garns, besonders bevorzugt eines metallbeschichteten Polyester- oder Polyamidgarns, als elektrischer Leiter in ein Trägermaterial ausgebildet ist.

Der elektrische Widerstand des elektrischen Leiters, wie er vor dem Versticken an einem einzelnen Strang des Leiters bestimmt werden kann, beträgt vorzugsweise weniger als 500 Ohm/m, besonders bevorzugt weniger als 300 Ohm/m.

Das Trägermaterial, das mit dem elektrischen Leiter bestickt ist, weist typischerweise selbst keine elektrische Leitfähigkeit auf. Um eine effektive Integration in die Schichtpressstoffplatte als Zwischenlage unter Ausbildung einer stabilen Platte zu ermöglichen, weist das Trägermaterial in der Regel Poren oder Zwischenräume auf. Dadurch kann das Trägermaterial ein härtbares duroplastisches Harz aufnehmen, z.B. ein härtbares duroplastisches Harz, mit dem die Kernlagen imprägniert sind, und das beim Verpressen des Pressstapels in die Poren oder Zwischenräume des Trägermaterials fließen und dort aushärten kann. Alternativ oder ergänzend kann das Trägermaterial selbst mit einem härtbaren duroplastischen Harz imprägniert sein, wenn es als Zwischenlage im Pressstapel verschlichtet wird. Im Ergebnis ist bevorzugt, dass das Trägermaterial nach der Integration in die Schichtpressstoffplatte durch Verpressen Poren oder Zwischenräume aufweist, die ein ausgehärtetes duroplastisches Harz enthalten.

Günstige Eigenschaften sowohl für das Besticken des Trägermaterials als auch für das Imprägnieren mit einem härtbaren duroplastischen Harz weisen faserhaltige Materialien auf, so dass das Trägermaterial bevorzugt ein faserhaltiges Material ist, stärker bevorzugt ein Material ausgewählt aus einem Textilmaterial und Papier. Als Textilmaterial kann z.B. ein Vliesstoff, ein Gewebe, ein Gewirk oder ein Gestrick zum Einsatz kommen. Besonders bevorzugt als Trägermaterial sind ein Vliesstoff oder ein Papier.

Papier kann als Trägermaterial, z.B. in Form eines Kraftpapiers, verwendet werden. Das Papier, bevorzugt das Kraftpapier, kann mit einem härtbaren duroplastischen Harz imprägniert sein. Die Grammatur des als Trägermaterial einsetzbaren Papiers kann z.B. 60 bis 500 g/m² betragen, typischerweise liegt sie im Bereich von 160 bis 260 g/m² (ohne das Gewicht des ggf. zum Imprägnieren eingesetzten Harzes). Ein Vliesstoff kann z.B. in Form eines Polyestervlieses eingesetzt werden. Die Grammatur des Vlieses kann z.B. 30 bis 300 g/m² betragen, wobei geringere Grammaturen das Durchtränken des Vlieses mit härtbarem duroplastischen Harz beim Verpressen begünstigen können.

Ist das Trägermaterial mit einem härtbaren duroplastischen Harz imprägniert, so kann ein Harz des gleichen Typs verwendet werden wie es in den Kernlagen enthalten ist, wie beispielsweise ein härtbares Phenol-Formaldehydharz. Als weiteres Beispiel für ein härtbares duroplastisches Harz, mit dem das Trägermaterial imprägniert sein kann, kann ein härtbares Melamin-Formaldehydharz genannt werden.

Bei dem Trägermaterial kann es sich um das gleiche Material wie das der Kernlagen handeln, oder es können unterschiedliche Materialien für das Trägermaterial und die Kernlagen verwendet werden.

Eine oder mehrere Lagen des Trägermaterials werden in bestickter Form im Pressstapel bei der Herstellung der Schichtpressstoffplatte verschlichtet und durch das Verpressen des Pressstapels als Zwischenlage in die Schichtpressstoffplatte integriert. Die Länge und Breite der Lage des Trägermaterials kann dabei so gewählt sein, dass sie der Länge und Breite der Schichtpressstoffplatte entspricht, es können jedoch auch andere Maße gewählt werden. Ein Trägermaterial, dessen Länge und Breite der Länge und Breite der Schichtpressstoffplatte entspricht, kann jedoch die genaue Positionierung der gestickten Struktur in der Schichtpressstoffplatte erleichtern.

Wie für den Fachmann klar ist, gibt die Position als Zwischenlage an, dass das bestickte Trägermaterial nicht auf der Außenseite der Platte angeordnet ist bzw. bei der Herstellung der Platte nicht als eine der beiden äußeren Lagen im Pressstapel verschlichtet ist. Bevorzugt ist das bestickte Trägermaterial als Zwischenlage im Kern der Schichtpressstoffplatte integriert, d.h. sie ist innerhalb des Kerns angeordnet bzw. als Zwischenlage zwischen zwei Kernlagen im Pressstapel verschlichtet. Weitere Kernlagen können natürlich in diesem Fall ober- oder unterhalb der beiden Kernlagen folgen, zwischen denen die Lage des Trägermaterials verschlichtet ist. Auch gemäß dieser bevorzugten Ausführungsform können im Kern der Schichtpressstoffplatte eine oder mehrere Lagen des bestickten Trägermaterials als Zwischenlage(n) integriert sein, d.h. der Kern der Schichtpressstoffplatte kann eine oder mehrere Lagen des bestickten Trägermaterials als Zwischenlage(n) enthalten. Sind im Kern mehrere Lagen enthalten, können sie vereinzelt, d.h. jeweils ohne Kontakt mit einer anderen Lage eines bestickten Trägermaterials, vorliegen. Mehrere Lagen des bestickten Trägermaterials können im Kern der Schichtpressstoffplatte aber auch unter Ausbildung eines Bauelements kombiniert sein, welches mehrere Lagen gestickter Strukturen aufweist. Eine solche Kombination kann z.B. erhalten werden, wenn im Pressstapel mehrere Lagen des bestickten Trägermaterials aufeinander als Zwischenlagen zwischen zwei imprägnierten Kernlagen vorliegen. Sind mehrere Lagen gestickter Strukturen in einem Bauelement kombiniert, so können diese miteinander leitend in Kontakt stehen.

Bevorzugt ist das Bauelement so in den Kern der Schichtpressstoffplatte integriert, dass ausgehend von der Plattenvorderseite bzw. von der Plattenrückseite jeweils eine Schicht in einer Dicke von mindestens 5% der Gesamtdicke der Platte frei von einem elektrisch leitenden Bauelement ist. Entsprechend ist es auch bevorzugt, dass bei der Herstellung der Schichtpressstoffplatte das bestickte Trägermaterial so im Pressstapel angeordnet ist, dass nach dem Verpressen ausgehend von der Plattenvorderseite bzw. von der Plattenrückseite jeweils eine Schicht in einer Dicke von mindestens 5% der Gesamtdicke der Platte frei von einem elektrisch leitenden Bauelement ist.

Durch das Sticken des elektrischen Leiters, z.B. eines elektrisch leitfähigen Garns, in das Trägermaterial werden Leiter und Trägermaterial mechanisch verbunden. Der elektrische Leiter dringt dabei typischerweise zumindest zum Teil in das Trägermaterial ein, oder er durchdringt das Trägermaterial vollständig, so dass er auf beiden Seiten einer Lage eines Trägermaterials vorliegen kann. Wird zum Besticken des Trägermaterials ein Ober- und ein Unterfaden verwendet, kann der elektrische Leiter, z.B. in Form eines leitfähigen Garns, als Oberfaden, als Unterfaden, oder als Ober- und Unterfaden verwendet werden. In Kombination mit dem elektrischen Leiter kann ein herkömmliches, nicht elektrisch leitfähiges Garn zum Einsatz kommen.

Die gestickte Struktur, mit der die Lage des Trägermaterials versehen ist, weist vorzugsweise eine Höhenausdehnung in Dickenrichtung der Schichtpressstoffplatte von weniger als 2,0 mm, stärker bevorzugt weniger als 1,5 mm, gemessen am bestickten Trägermaterial vor dem Verpressen, auf.

Die gestickte Struktur des elektrisch leitfähigen Bauelements ist bevorzugt so aufgebaut, dass sie eine elektrisch leitfähige Flächenstruktur umfasst, in der mehrere Stränge des elektrischen Leiters, bevorzugt des leitfähigen Garns, nebeneinander angeordnet sind und miteinander in Kontakt stehen. Wie vorstehend erläutert können in einem elektrisch leitfähigen Bauelement auch mehrere solcher Flächenstrukturen so kombiniert sein, dass eine dreidimensionale Struktur entsteht. Dazu können, z.B. mehrere Lagen des bestickten Trägermaterials unter Ausbildung eines Bauelements kombiniert werden, welches mehrere Lagen gestickter Strukturen aufweist.

Die gestickte Struktur des Bauelements, bzw. jedes Bauelements bei Vorliegen von mehreren Bauelementen in der Schichtpressstoffplatte, weist bevorzugt eine Flächenausdehnung von mindestens 100 mm², stärker bevorzugt mindestens 200 mm² auf, bezogen auf die von dem elektrischen Leiter belegte Fläche in der Plattenebene. Kombiniert ein Bauelement mehrere Lagen gestickter Strukturen, so werden sich überschneidende Bereiche bei der Bestimmung der Flächenausdehnung nicht mehrfach berücksichtigt.

Die Maximalfläche der gestickten Struktur eines Bauelements ist natürlich durch die Fläche der Schichtpressstoffplatte nach oben begrenzt. Typischerweise ist die Fläche der gestickten Struktur eines einzelnen Bauelements jedoch erheblich kleiner als die Plattenfläche, und beträgt beispielsweise weniger als 50.000 mm².

Durch die Integration des elektrisch leitfähigen Bauelements weist die Schichtpressstoffplatte eine zusätzliche technische Funktionalität auf, wobei der Begriff des Bauelements vom Fachmann so verstanden wird, dass es sich um eine Einheit handelt, die physisch nicht weiter unterteilt werden kann, ohne ihre technische Funktion zu verlieren. Beispiele für solche elektrisch leitende Bauelemente sind eine Elektrode, ein Sensor oder eine Antenne. Bevorzugt handelt es sich bei dem elektrisch leitfähigen Bauelement, das eine gestickte Struktur aufweist, um eine Antenne.

Sind in der Schichtpressstoffplatte mehrere elektrisch leitfähige Bauelemente enthalten, die eine gestickte Struktur aufweisen, so können sie die gleichen oder unterschiedliche Funktionen ausüben. Beispielsweise kann es sich um Antennen für unterschiedliche Sende- oder Empfangsfrequenzen handeln. Mehrere Bauelemente können in der erfindungsgemäßen Schichtpressstoffplatte auch so kombiniert sein, dass eine elektrische Schaltung in der Schichtpressstoffplatte entsteht, sofern mindestens eines der Bauelemente ein elektrisch leitfähiges Bauelement ist, das eine gestickte Struktur aufweist.

Das elektrisch leitfähige Bauelement, das eine gestickte Struktur aufweist, kann allein aus der gestickten Struktur bestehen. Das elektrisch leitfähige Bauelement, das eine gestickte Struktur aufweist, kann aber auch neben der gestickten Struktur eine oder mehrere weitere Struktureinheiten aufweisen, die nicht gestickt sind, sondern die z.B. eine massive Metallstruktur aufweisen. Auch eine solche weitere Struktureinheit kann beispielsweise in Form einer leitfähigen Schicht in die Schichtpressstoffplatte integriert sein, oder kann einen mehrschichtigen Aufbau aufweisen.

Bei einer Antenne als elektrisch leitfähiges Bauelement, das eine gestickte Struktur aufweist, kann es sich im Rahmen der Erfindung beispielsweise um eine Antenne zum Senden und Empfangen von Signalen handeln, wie eine WLAN-Antenne, Bluetooth-Antenne oder Mobilfunkantenne (z.B. 2G, 3G, 4G oder 5G), oder um eine Antenne ausschließlich zum Empfangen von Signalen, wie eine GPS-Antenne. Bevorzugt handelt es sich um eine WLAN-Antenne oder um eine Mobilfunkantenne.

Auch eine Antenne als elektrisch leitfähiges Bauelement kann auf einer einzelnen Lage eines Trägermaterials bereitgestellt sein, oder sie kann auf mehreren Lagen eines Trägermaterials bereitgestellt werden, die in die Schichtpressstoffplatte, bevorzugt in den Kern der Schichtpressstoffplatte, integriert ist bzw. sind.

Die Antenne ist bevorzugt als Patchantenne ausgebildet. Beispielsweise kann es sich um eine PIF-Antenne (engl.: planar inverted F-shaped antenna) handeln.

Neben dem elektrisch leitfähigen Bauelement, das eine gestickte Struktur aufweist, kann die Schichtpressstoffplatte eine zusätzliche Lage eines elektrisch leitfähigen Materials umfassen, die zur Abschirmung des elektrisch leitfähigen Bauelements dient. Diese Abschirmung kann z.B. im Fall einer Antenne hilfreich sein, um elektromagnetische Strahlung gerichtet abzugeben oder zu empfangen. Als zusätzliche Lage eines elektrisch leitfähigen Materials kann z.B. eine Metallfolie eingesetzt werden, die in die Schichtpressstoffplatte integriert ist, bzw. die zu Herstellung einer entsprechenden Schichtpressstoffplatte in den Pressstapel eingebracht wird. Als zusätzliche Lage eines elektrisch leitfähigen Materials kann aber auch eine zusätzliche Lage eines mit einem elektrischen Leiter, bevorzugt mit einem leitfähigen Garn, bestickten Trägermaterials in die Schichtpressstoffplatte integriert werden. Für das Trägermaterial und den Leiter gelten die Angaben, die oben im Zusammenhang mit dem elektrisch leitfähigen Bauelement gemacht wurden, entsprechend.

Eine Außenfläche der Schichtpressstoffplatte weist bevorzugt einen elektrischen Kontakt auf, der eine elektrische Verbindung mit dem in der Schichtpressstoffplatte enthaltenen Bauelement aufweist. So können z.B. bei der Integration einer Antenne als elektrisch leitfähiges Bauteil in den Kern der Schichtpressstoffplatte von der Antenne empfangene Signale außerhalb der Platte (z.B. bei einem Empfänger) weiterverarbeitet werden, oder die Antenne kann Signale versenden, die von außerhalb der Platte (z.B. von einem Sender) zugeführt werden. Bei der Außenfläche, die den elektrischen Kontakt aufweist, kann es sich um eine Plattenoberfläche oder um eine Kante der Schichtpressstoffplatte handeln. Bevorzugt handelt es sich um eine Plattenoberfläche, stärker bevorzugt um die Plattenrückseite. Um einen Anschluss zu erleichtern, umfasst der elektrische Kontakt an der Außenfläche typischerweise einen Steckverbinder. Insbesondere für eine Antenne als elektrisch leitfähiges Bauelement eignet sich hier beispielsweise ein SMA-Steckverbinder oder ein MHF-Steckverbinder.

Die elektrische Verbindung, über die der elektrische Kontakt mit dem elektrisch leitfähigen Bauelement verbunden ist, kann beispielweise eine Streifenleitung umfassen. Eine solche Streifenleitung kann vorteilhafterweise ebenfalls durch Sticken eines elektrischen Leiters, wie eines leitfähigen Garns, in ein Trägermaterial ausgebildet sein. Dabei kann es sich um eine Lage des Trägermaterials handeln die auch das elektrisch leitfähige Bauelement trägt, oder um eine Lage eines Trägermaterials, die in der Schichtpressstoffplatte, bevorzugt im Kern, bzw. im Pressstapel bei der Herstellung, so angeordnet ist, dass das elektrisch leitfähige Bauelement auf einer Lage des Trägermaterials und die Streifenleitung auf einer benachbarten Lage eines Trägermaterials miteinander in Kontakt stehen. Bezüglich des gestickten elektrischen Leiters und des bestickten Trägermaterials gelten die Angaben, die oben im Zusammenhang mit dem elektrisch leitfähigen Bauelement gemacht wurden, entsprechend.

Umfasst der elektrische Kontakt wie oben erwähnt einen Steckverbinder, so kann der Steckverbinder auf einer Plattenoberfläche angebracht sein. Beispielsweise kann der Steckverbinder auf die Plattenoberfläche aufgeklebt oder aufgeschraubt sein. Es kann für die Bereitstellung der Verbindung zwischen Steckverbinder und Bauelement von Vorteil sein, wenn der Steckverbinder an einer Position auf der Plattenoberfläche angebracht ist, die der Position des Bauelements im Platteninneren entspricht. Die elektrische Verbindung zwischen dem Steckverbinder und dem in der Schichtpressstoffplatte enthaltenen Bauelement kann beispielsweise eine Streifenleitung wie vorstehend erwähnt umfassen. Der Steckverbinder kann einen Anschluss aufweisen, z.B. einen Metallstift, der in die Platte hineinragt und mit dem Bauelement in Kontakt steht. Der Anschluss des Steckverbinders kann das Bauelement direkt kontaktieren, oder über eine elektrische Leitung, beispielsweise eine Streifenleitung wie vorstehend erwähnt. Wie für den Fachmann verständlich sein wird, würde ein Steckverbinder auf einer Plattenoberfläche typischerweise nach dem Verpressen des Pressstapels zur Bereitstellung der erfindungsgemäßen Schichtpressstoffplatte angebracht. Der Anschluss, der in die Platte hineinragt und das Bauelement kontaktiert, kann beispielsweise mit Hilfe einer Bohrung in die Platte eingebracht werden. Demgemäß kann das erfindungsgemäße Verfahren einen weiteren Schritt umfassen, bei dem nach dem Verpressen des Pressstapels ein Steckverbinder auf eine Plattenoberfläche angebracht wird, der einen Anschluss aufweist, wobei der Anschluss in die Platte hineinragt und das Bauelement kontaktiert.

Das Verpressen des Pressstapels zur Bereitstellung der erfindungsgemäßen Schichtpressstoffplatte erfolgt bei einer Temperatur und einem Druck, die ausreichen, um das Fließen und das anschließende Aushärten des härtbaren duroplastischen Harzes zu ermöglichen. Dabei kann auf Bedingungen zurückgegriffen werden, wie sie üblicherweise bei der Herstellung von Schichtpressstoffplatten zum Einsatz kommen. So erfolgt das Verpressen des Pressstapels typischerweise bei einer Temperatur von mehr als 100 °C, besonders bevorzugt von 130 bis 150 °C. Der Druck beim Verpressen beträgt üblicherweise mehr als 2×10⁶ Pa (20 bar), besonders bevorzugt 6×10⁶ - 8×10⁶ Pa (60 bis 80 bar).

Die Maße der erfindungsgemäßen Schichtpressstoffplatte unterliegen keinen besonderen Einschränkungen. Die Platten können in Größen und Dicken bereitgestellt werden wie sie üblicherweise zur Anwendung kommen. Beispielweise kann die Dicke der Schichtpressstoffplatte 0,8 bis 30 mm, bevorzugt 6 bis 25 mm betragen. Übliche Längen liegen im Bereich von 2000 bis 4500 mm, übliche Breiten im Bereich von 1000 bis 2000 mm.

In Übereinstimmung mit den vorstehend diskutierten Details ist eine Schichtpressstoffplatte im Rahmen der vorliegenden Erfindung bevorzugt, umfassend einen Kern, eine Deckschicht an beiden Plattenoberflächen, sowie eine Antenne, die im Kern enthalten ist, wobei die Antenne eine gestickte Struktur aufweist, die durch Sticken eines elektrisch leitfähigen Garns in eine Lage eines Vliesstoffs oder eine Papierlage als Trägermaterial ausgebildet ist und das bestickte Trägermaterial als Zwischenlage in den Kern der Schichtpressstoffplatte integriert ist, und wobei eine Außenfläche der Schichtpressstoffplatte einen elektrischen Kontakt aufweist, der über eine elektrische Verbindung mit der im Kern der Schichtpressstoffplatte enthaltenen Antenne verbunden ist.

Gleichermaßen bevorzugt ist ein Verfahren zur Herstellung einer Schichtpressstoffplatte, die einen Kern, eine Deckschicht an beiden Plattenoberflächen sowie eine Antenne umfasst, die im Kern enthalten ist, wobei die Antenne eine gestickte Struktur aufweist, die durch Sticken eines elektrisch leitfähiges Garns in eine Lage eines Vliesstoffs oder eine Papierlage als Trägermaterial ausgebildet ist, wobei das bestickte Trägermaterial als Zwischenlage in den Kern der Schichtpressstoffplatte integriert ist und das bestickte Trägermaterial als Zwischenlage in den Kern der Schichtpressstoffplatte integriert ist, und wobei eine Außenfläche der Schichtpressstoffplatte einen elektrischen Kontakt aufweist, der über eine elektrische Verbindung mit der im Kern der Schichtpressstoffplatte enthaltenen Antenne verbunden ist,
wobei das Verfahren die folgenden Schritte umfasst:
Bereitstellen eines Pressstapels, der mindestens die folgenden Lagen umfasst
(i) mehrere imprägnierte Kernlagen, die mit einem härtbaren duroplastischen Harz imprägniert sind,
(ii) zwei oder mehr Lagen eines Materials zum Bilden einer Deckschicht, und
(iii) eine Lage des mit dem elektrisch leitfähigen Garn bestickten Vliesstoffs oder Papiers als Zwischenlage zwischen zwei imprägnierten Kernlagen; und

Verpressen des Pressstapels bei einer Temperatur und einem Druck, die ausreichen, um das Fließen und das anschließende Aushärten des härtbaren duroplastischen Harzes ermöglichen.

### Beispiele

Die folgenden Beispiele dienen zur Illustration der Erfindung, ohne sie darauf zu begrenzen.

### 1. Schichtpressstoffplatte mit einer WLAN-Antenne als integriertes elektrisch leitfähiges Bauelement

### 1.1 Herstellung der Schichtpressstoffplatte

Für die Herstellung einer Schichtpressstoffplatte mit einem integrierten elektrisch leitfähigen Bauelement werden als Kernlagen Kraftpapiere mit einer Grammatur von 213 g m⁻² und als dekorative Oberflächenschicht durchgefärbtes schwarzes Dekorpapier mit einer Grammatur von 80 g m⁻² verwendet.

Die für die Kernlagen verwendeten Kraftpapiere werden mit Phenol-Formaldehydharz imprägniert, das Dekorpapier wird mit einem Melamin-Formaldehydharz imprägniert. Hierbei werden die Papiere mit den genannten Harzen getränkt, anschließend bei Temperaturen um 120 °C getrocknet und für die weitere Verarbeitung in Form gebracht. Bei der dekorativen Oberflächenschicht besteht nach der Imprägnierung die Möglichkeit, eine Polymerschicht aufzubringen, um die Beständigkeit der fertigen Platte zu verbessern. Hierbei wird bevorzugt ein Polyurethan(meth)acrylat-Polymer teilweise in Verbindung mit einem Polyurethan-Polymer verwendet. Nach der Versetzung der Ausgangsstoffe mit einem Isocyanat-Härter erfolgt die Trocknung bei ca. 120 °C.

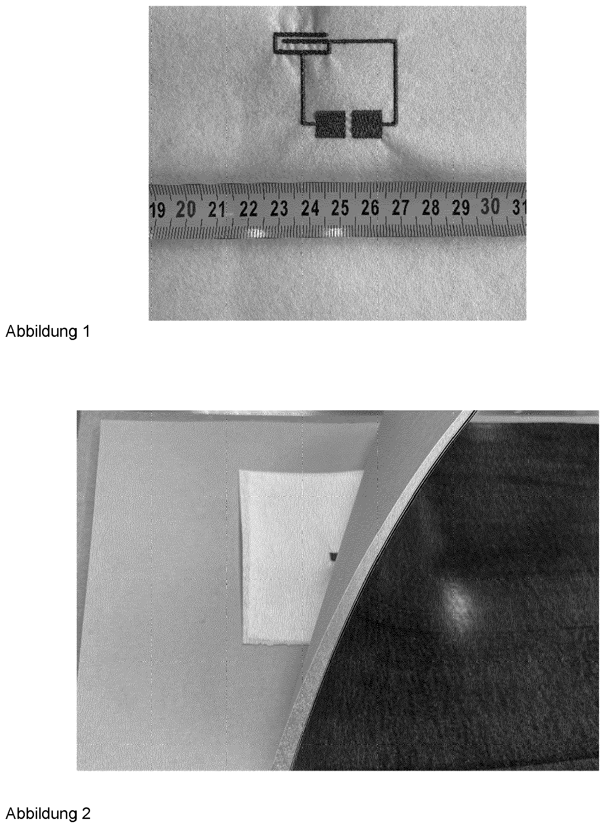

Für die Herstellung des elektrisch leitfähige Bauelements wird ein elektrischer Leiter, in dem beschriebenen Beispiel ein silberbeschichtetes Polyamid, auf ein zweilagiges Stickvlies gestickt. Die Geometrie des gestickten Bauelements (siehe Abbildung 1) ist angepasst an seine Anforderungen. In dem beschriebenen Beispiel stellt die gestickte elektrisch leitende Struktur eine WLAN-Antenne dar.

Die so hergestellten Halbfabrikate werden zu einem Pressstapel verschlichtet. Dieser besteht aus 40 Kernpapierlagen, den beiden Dekorpapieren und dem Stickvlies mit der gestickten WLAN-Antenne. Ganz unten und oben im Pressstapel werden die Dekorpapiere platziert, dazwischen die Kernpapiere. Zwischen zwei Kernpapierlagen wird das zu integrierende elektrisch leitende Bauelement eingebracht (siehe Abbildung 2). Nach der Verschlichtung wird der Pressstapel bei einem Druck von 6,5×10⁶ Pa und einer Temperatur von 130 °C für die Dauer von 45 min verpresst.

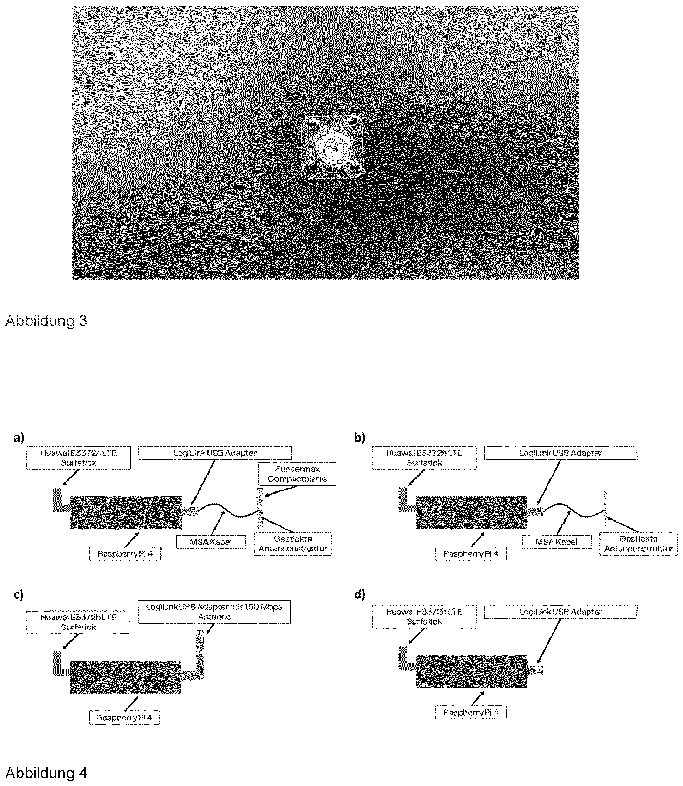

Im beschriebenen Fall wird eine 10 mm dicke Platte erhalten. Im finalen Prozessschritt erfolgt die Kontaktierung des nun integrierten elektrisch leitfähigen Bauelements. Diese kann an der Plattenrückseite oder an einer der vier Seitenkanten erfolgen. Bei der Kontaktierung über die Plattenrückseite wird die Platte bis zum bestickten Trägermaterial angebohrt und zum Beispiel mit Hilfe eines SMA BU F SMA-Steckverbinders (BKL Electronics Kreimendahl GmbH, Deutschland) und Silberleitlack elektrisch kontaktiert. Die Befestigung des SMA-Steckverbinders an der Plattenrückseite kann entweder durch Kleben oder mit Hilfe von vier M2 Schrauben erfolgen (siehe Abbildung 3).

Abbildung 1 zeigt eine gestickte leitfähige Struktur bestehend aus einem silberbeschichteten Polyamid Multifilament auf einem mittelschweren zweilagigen Stickvlies.

Abbildung 2 zeigt einen Pressstapel mit elektrisch leitfähiger gestickter Struktur zwischen zwei Kernpapieren und schwarzem Dekorpapier.

Abbildung 3 zeigt einen Plattenrückseite mit SMA-Steckverbinder als Kontaktierungselement einer verpressten elektrisch leitenden Struktur

### 1.2 Leistungsvergleich unterschiedlicher WLAN-Antennen

### 1.2.1 Einleitung

Im Zuge des durchgeführten Benchmarkings wird eine auf Vliesstoff gestickte elektrisch leitende und in den Kern einer von Fundermax GmbH hergestellten Compactplatte eingebrachte WLAN-Antenne (vergleiche Punkt 1.1) mit einer kommerziellen Standard-Router-Antenne verglichen. Weiters wird die Sendefähigkeit einer unverpressten gestickten Antennenstruktur vermessen, die Ergebnisse gegenübergestellt und diskutiert.

### 1.2.2 Verwendete Materialien

Der für die durchgeführten Tests verwendete Messstand bestand aus folgenden Komponenten:
Für die Signalverarbeitung kamen
- 1x Raspberry Pi 4, Modell B 8GB
- 1x LogiLink Wireless N 150 Mbps USB Adapter WL 0151A (2 teilig - Adapter + Antenne)
- 1x Huawei E3372h LTE Surfstick
- 1x MSA Antennenkabel.
zum Einsatz.

Es wurden vier verschiedene Szenarien realisiert, dabei diente jeweils eine der folgenden Komponenten als WLAN-Antenne:
a) 1x Compactplatte mit verpresster gestickter Antennenstruktur
b) 1x unverpresste gestickte Antennenstruktur
c) 1x LogiLink USB Adapter mit 150 Mbps Antenne (kommerzielle Antenne)
d) 1x LogiLink USB Adapter ohne 150 Mbps Antenne (kommerzielle Antenne)

Zusätzlich wurde der Gleichstromwiderstand einer unverpressten und einer verpressten Antennenstruktur mit Hilfe eines PAN 118 Digital Multimeters (Krystufek GmbH & Co KG, Österreich) vermessen.

### 1.2.3 Durchführung

Zu Beginn erfolgte die Konfigurierung des Raspberry Pi 4, sodass eine Internetverbindung mit Hilfe eines Huawei E3372h LTE Surfsticks hergestellt werden konnte und die in den Raspberry Pi 4 integrierte WLAN-Antenne ausgeschaltet wurde. In weiterer Folge diente der Raspberry Pi 4 als Internet access point und es wurden vier verschiedene Szenarien vermessen. Es diente a) eine in eine Compactplatte eingebrachte und verpresste gestickte Antennenstruktur, b) eine unverpresste gestickte Antennenstruktur, c) ein LogiLink USB Adapter mit 150 Mbps Antenne oder d) ein LogiLink USB Adapter ohne 150 Mbps Antenne als WLAN-Antenne.

Die verpresste und unverpresste gestickte Antennenstruktur wurden über einen LogiLink USB Adapter und ein MSA Kabel mit dem Raspberry Pi 4 verbunden. Die LogiLink USB Adapter selbst konnten direkt über einen integrierten USB-Port an den Raspberry Pi 4 angeschlossen werden. Die Signalanalyse erfolgte mittels der Benchmark Software Wavemon und einem kommerziell erhältlichen Computer, der über das von der jeweiligen im Einsatz befindlichen Antenne ausgehende WLAN-Netzwerk mit dem Raspberry Pi 4 verbunden wurde. Mit Hilfe der beschriebenen Aufbauten (Abb. 4 a-d)) wurden die Link Quality, das Signal Level und das Noise Level untersucht. Die Positionierung der Antennen änderte sich zwischen den Aufbauten nur unwesentlich, etwaige minimale Positionsänderungen hatten keinen signifikanten Einfluss auf die Messergebnisse.

Abbildung 4 zeigt eine schematische Darstellung der durchgeführten Tests. Hierbei wurde ein WLAN-Netzwerk mit Hilfe a) einer in eine Compactplatte eingebrachten und verpressten gestickten Antennenstruktur, b) einer unverpressten gestickte Antennenstruktur, c) eines LogiLink USB Adapters mit 150 Mbps Antenne oder d) eines LogiLink USB Adapters ohne 150 Mbps Antenne aufgespannt.

### 1.2.4 Ergebnisse und Diskussion

Im direkten Vergleich zeigt die verpresste gestickte Antennenstruktur (a) die beste Link Quality von 91/100, gefolgt von der kommerziellen LogiLink Antenne (c) mit 69/100. Die nicht verpresste Antennenstruktur (b) weist eine Link Quality (Sendeleistung der Antenne) von 21/100 auf. Eine fehlende Antenne (nur mit LogiLink USB Adapter) (d) führt zu einer Link Quality von 0/100 und als einzige zu einem messbaren Noise Level von 5 dBm. Bei den 3 weiteren Messkonfigurationen ist das Noise Level unterhalb der Nachweisgrenze (<LOD). Das Signal Level beschreibt die Signalstärke, je höher der Betrag, desto schwächer das WLAN-Signal. Das beste Ergebnis liefert die verpresste Antennenstruktur (a) mit -44 dBm. Die Messung mit der kommerziellen 150 Mdps Antenne (c) ergibt -50 dBm. Ein Unterschied von 6 dBm bedeutet, dass die Signalstärke des WLAN-Signals ausgehend von der verpressten gestickten Antennenstruktur (a) um einen Faktor 4 höher ist als jene ausgehend von der vermessenen kommerziellen Antenne (b). Auf den Plätzen 3 und 4 folgen wie schon bei der Link Quality die nicht verpresste gestickte Antennenstruktur (b) und der Aufbau mit fehlender Antenne (d).

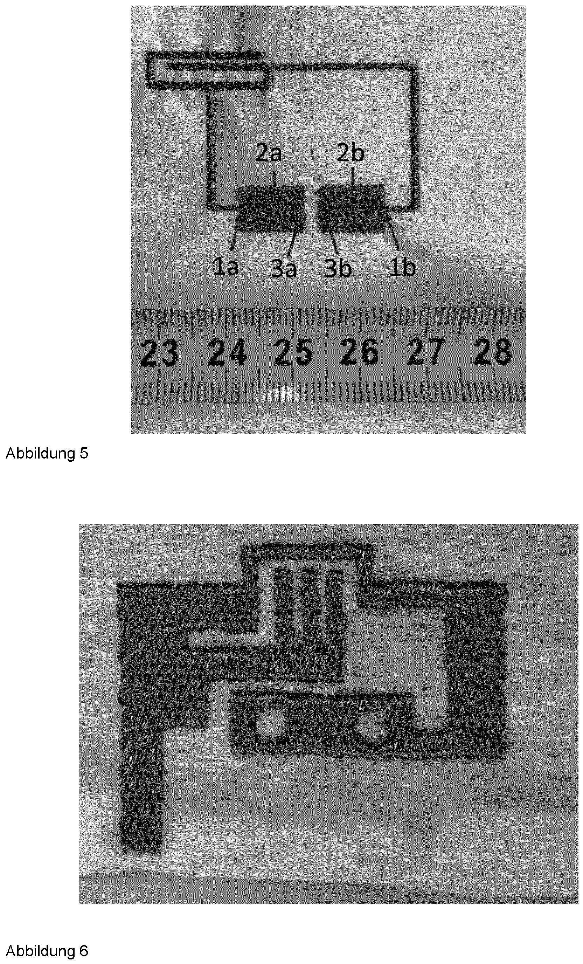

Die beiden gestickten Antennenstrukturen (a und b) unterscheiden sich nicht in ihrer Geometrie oder Materialbeschaffenheit. Der einzige Unterschied besteht darin, dass die verpresste Antennenstruktur (a) bei der Herstellung in den kunstharzgetränkten Kern einer Compactplatten eingebracht und bei erhöhter Temperatur (>120 °C) und ca. 60 bar verpresst wurde, die nicht verpresste gestickte Antennenstruktur (b) durchlief keinen Verpressungsprozess. Somit zeigen die vorliegenden Messergebnisse, dass eine Verpressung zu einer signifikanten Steigerung der Link Quality und des Signal Levels führt. Die Verpressung führt zu einer Steigerung der gemessenen Signalstärke um mehr als einen Faktor von 150. Weiters geht hervor, dass für einen praxisnahen kommerziellen Einsatz eine Verpressung unabdingbar ist. In der nachstehenden Tabelle 1 sind die beschriebenen Messergebnisse gegenübergestellt. Einen Anhaltspunkt für einen möglichen Grund für die Verbesserung der Antennenleistung durch den Pressvorgang liefert der Gleichstromwiderstand. Die in Abbildung 5 zu erkennenden quadratischen Flächen können als Kontaktierungsflächen für die WLAN-Antenne genutzt werden. Im Zuge einer Testserie wurde der Gleichstromwiderstand an drei unverpressten gestickten Strukturen zwischen den Punkten 1a und 1b, 2a und 2b, bzw. 3a und 3b gemessen. Die Gleichstromwiderstand betrug hierbei 11,6 - 16,1 Ω. Hingegen wies eine verpresste Antennenstruktur einen Gleichstromwiderstand von 7,0 Ω auf. Die Einzelmesswerte werden in Tabelle 2 angeführt.

Abbildung 5 zeigt die auf ein zweilagiges Trägermaterial aufgestickte Antennenstruktur. Die beiden quadratischen Flächen können als Kontaktierungsflächen verwendet werden. Der Gleichstromwiderstand wurde zwischen 1a und 1b, 2a und 2b bzw. 3a und 3b gemessen.

**Tabelle l:Ergebnisse der durchgeführten Tests. Als Testsieger geht die verpresste Antennenstruktur (a) gefolgt von der kommerziellen LogiLink 150 Mbps (b) hervor.**

| | a) verpresste Antennenstruktur | b) nicht verpresste Antennenstruktur | c) LogiLink USB Adapter mit 150 Mbps Antenne | d) LogiLink USB Adapter ohne 150 Mbps Antenne |
|---|---|---|---|---|
| Link Quality | 93/100 | 21/100 | 69/100 | 0/100 |
| Signal Level (dBm) | -44 | -66 | -50 | -81 |
| Noise Level (dBM) | <LOD | <LOD | <LOD | 5 |

**Tabelle 2: Gleichstromwiderstand verpresster und unverpresster gestickter Antennenstrukturen**

| | Struktur 1 (Ω) | Struktur 2 (Ω) | Struktur 3 (Ω) |
|---|---|---|---|
| unverpresste Struktur 1a-1b | 12,6 | 12,5 | 11,6 |
| unverpresste Struktur 2a-2b | 14,4 | 14,3 | 13,6 |
| unverpresste Struktur 3a-3b | 16,1 | 15,8 | 14,7 |
| verpresste Struktur | 7,0 | 6,9 | |

### 2. Schichtpressstoffplatte mit einer GSM-Antenne als integriertes elektrisch leitfähiges Bauelement

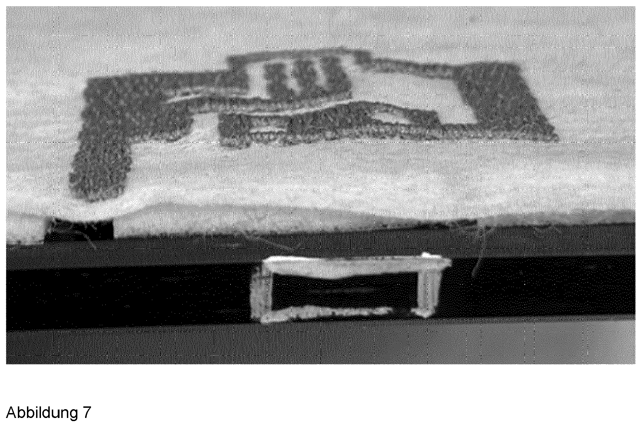

In ähnlicher Weise wie in Beispiel 1 beschrieben, wurde eine Schichtpressstoffplatte mit einer GSM-Antenne als integriertes elektrisch leitfähiges Bauelement hergestellt. Für die Herstellung des elektrisch leitfähigen Bauelements wird ein silberbeschichtetes Polyamid auf ein dreilagiges Stickvlies gestickt. In diesem Beispiel stellt die gestickte elektrisch leitende Struktur eine GSM-Antenne dar (vgl. Abbildungen 6 und 7).

Abbildung 6 zeigt eine Detailansicht der auf das Vlies gestickten GSM-Antenne.

Abbildung 7 zeigt die Schichtpressstoffplatte mit integrierter GSM-Antenne (zum Größenvergleich liegt auf der Platte zusätzlich ein weiteres mit einer Antennenstruktur besticktes Vlies). An der Plattenkante ist ein Bereich markiert, an dem die in die Platte integrierte gestickte Struktur an der Außenfläche der Platte kontaktierbar ist.

## Patentansprüche

1. Schichtpressstoffplatte, umfassend einen Kern, eine Deckschicht an einer oder beiden Plattenoberflächen, sowie ein elektrisch leifähiges Bauelement, wobei das elektrisch leitfähige Bauelement eine gestickte Struktur aufweist, die durch Sticken eines elektrischen Leiters in ein Trägermaterial ausgebildet ist, und wobei das bestickte Trägermaterial als eine Zwischenlage in die Schichtpressstoffplatte integriert ist.

2. Schichtpressstoffplatte nach Anspruch 1, wobei das elektrisch leitfähige Bauelement im Kern der Schichtpressstoffplatte enthalten ist und das bestickte Trägermaterial als Zwischenlage in den Kern der Schichtpressstoffplatte integriert ist.

3. Schichtpressstoffplatte nach Anspruch 1 oder 2, wobei es sich bei dem zum Sticken verwendeten elektrischen Leiter um ein elektrisch leitfähiges Garn oder um einen Draht handelt.

4. Schichtpressstoffplatte nach Anspruch 3, wobei es sich bei dem elektrisch leitfähigen Garn um ein Garn mit einer Metallbeschichtung oder um ein Garn mit Fasern aus einem elektrisch leitfähigen Material handelt.

5. Schichtpressstoffplatte nach einem der Ansprüche 1 bis 4, wobei das Trägermaterial ein faserhaltiges Material ist.

6. Schichtpressstoffplatte nach einem der Ansprüche 1 bis 5, wobei das Trägermaterial ausgewählt ist aus einem Textilmaterial und Papier.

7. Schichtpressstoffplatte nach einem der Ansprüche 1 bis 6, wobei im Kern der Schichtpressstoffplatte mehrere Lagen des bestickten Trägermaterials unter Ausbildung eines Bauelements kombiniert sind, welches mehrere Lagen gestickter Strukturen aufweist.

8. Schichtpressstoffplatte nach einem der Ansprüche 1 bis 7, wobei das Bauelement eine Flächenausdehnung von mindestens 100 mm² aufweist, bezogen auf die von dem elektrischen Leiter belegte Fläche in der Plattenebene.

9. Schichtpressstoffplatte nach Punkt einem der Ansprüche 1 bis 8, wobei es sich bei dem elektrisch leitfähigen Bauelement um eine Antenne, bevorzugt um eine WLAN-Antenne, Bluetooth-Antenne, GPS-Antenne oder um eine Mobilfunkantenne handelt.

10. Schichtpressstoffplatte nach Anspruch 9, wobei es sich bei der Antenne um eine PIF-Antenne handelt.

11. Schichtpressstoffplatte nach einem der Ansprüche 1 bis 10, wobei eine Außenfläche der Schichtpressstoffplatte einen elektrischen Kontakt aufweist, der über eine elektrische Verbindung mit dem in der Schichtpressstoffplatte enthaltenen Bauelement verbunden ist.

12. Schichtpressstoffplatte nach einem der Ansprüche 1 bis 11, wobei der Kern Papier, bevorzugt Kraftpapier, und ein ausgehärtetes duroplastisches Harz, bevorzugt Phenol-Formaldehydharz, umfasst.

13. Schichtpressstoffplatte nach einem der Ansprüche 1 bis 12, wobei die Deckschicht ein Dekorpapier und ein ausgehärtetes duroplastisches Harz, bevorzugt ein Melamin-Formaldehydharz, umfasst.

14. Schichtpressstoffplatte nach Anspruch 13, wobei das Dekorpapier zusätzlich eine Polymerbeschichtung trägt.

15. Verfahren zur Herstellung einer Schichtpressstoffplatte gemäß einem der Ansprüche 1 bis 14, wobei das Verfahren die folgenden Schritte umfasst:
Bereitstellen eines Pressstapels, der mindestens die folgenden Lagen umfasst
(i) mehrere imprägnierte Kernlagen, die mit einem härtbaren duroplastischen Harz imprägniert sind,
(ii) eine Lage zum Bilden einer Deckschicht;
(iii) eine Lage des mit dem elektrischen Leiter bestickten Trägermaterials als Zwischenlage, und
Verpressen des Pressstapels bei einer Temperatur und einem Druck, die ausreichen, um das Fließen und das anschließende Aushärten des härtbaren duroplastischen Harzes ermöglichen.
